# EUROPÄISCHE PATENTSCHRIFT

(11) **EP 1 763 543 B1**
(45) Veröffentlichungstag und Bekanntmachung des Hinweises auf die Patenterteilung: **31.10.2007**
(21) Anmeldenummer: 05753577.5
(22) Anmeldetag: 23.06.2005
(51) Int. Cl.: C08F 8/28, C08F 8/12, C08F 216/06, C08F 226/00

(54) **SULFONATFUNKTIONELLE POLYVINYLACETALE**
SULFONATE FUNCTIONAL POLYVINYL ACETALS
POLYVINYLACETALS A FONCTION SULFONATE

(30) Priorität: 01.07.2004 DE 102004031972
(43) Veröffentlichungstag der Anmeldung: 21.03.2007
(73) Patentinhaber: Wacker Polymer Systems GmbH & Co. KG, 84489 Burghausen (DE)
(72) Erfinder: LUMPP, Andreas, 13084-190 Campinas S.P (BR)
(74) Vertreter: Schuderer, Michael
(86) Internationale Anmeldenummer: PCT/EP2005/006820
(87) Internationale Veröffentlichungsnummer: WO 2006/002832

(56) Entgegenhaltungen:
- EP-A- 0 594 026
- EP-A- 0 634 447
- EP-A- 1 284 274

## Beschreibung

Die Erfindung betrifft sulfonatfunktionelle Polyvinylacetale, Verfahren zu deren Herstellung und deren Verwendung.

Die Herstellung von Polyvinylacetalen, aus den entsprechenden Polyvinylalkoholen durch polymeranaloge Umsetzung mit den entsprechenden Aldehyden, ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozeß (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral erlangt.

Unter anderem aufgrund ihrer guten Pigment-Bindekraft werden Polyvinylbutyrale auch als Bindemittel in Lacken und speziell in Druckfarben eingesetzt. In dieser Anwendung wird die Anforderung gestellt, daß die organischen Lösungen der Polyvinylbutyrale möglichst niedere Lösungsviskosität aufweisen sollen, um damit Farben mit hohem Feststoffgehalt bei möglichst hohem Bindemittelanteil herstellen zu können.

Die Lösungsviskosität von Polyvinylbutyral wird im Stand der Technik über das Molekulargewicht reguliert, indem zur Herstellung des Polyvinylbutyrals Polyvinylacetate mit niederem Molekulargewicht bzw. Polymerisationsgrad als Edukte eingesetzt werden. Die Verwendung von niedermolekularen Polyvinylbutyralen als Trägermaterial in Pigmentpräparationen für Druckfarben ist beispielsweise in der DE-B 2643076 (US-A 4130539) beschrieben. Nachteilig ist dabei, dass bei der Herstellung von niedermolekularen Polyvinylbutyralen durch Acetalisierung von niedermolekularen Polyvinylalkoholen erhebliche Probleme auftreten, da Lösungen von niedermolekularen, vollverseiften Polyvinylalkoholen unter anderem zum Gelieren neigen, und daher bei Temperaturen von mindestens 50°C gehandhabt werden müssen. In der EP 923610 B1 wird vorgeschlagen, zum Erhalt einer niederen Lösungsviskosität die Polyvinylacetale ausgehend von Copolymeren von Vinylacetat und 1-Alkylvinylacetat herzustellen.

Der Erfindung lag die Aufgabe zugrunde, Polyvinylacetale zur Verfügung zu stellen, welche als Bindemittel in Lacken und insbesondere in Druckfarben verbesserte rheologische Eigenschaften zeigen, nämlich eine niedere Lösungsviskosität und möglichst newtonsches Fließverhalten.

Gegenstand der Erfindung sind sulfonatfunktionelle Polyvinylacetale mit 0.1 bis 50 Gew.-% Comonomereinheiten, welche sich von sulfonatfunktionellen Vinyl- und Allylethern ableiten.

Die sulfonatfunktionellen Vinyl- und Allylether sind Vinyl- und Allyloxy-Alkylsulfonate mit unverzweigten oder verzweigten C₁- bis C₆-Alkylgruppen, welche gegebenenfalls substituiert sein können. Bevorzugt werden Allyloxyalkylsulfonate von C₂- bis C₄- Alkylsulfonaten, wie Allyloxymethylsulfonat, Allyloxyethylsulfonat, Allyloxypropylsulfonat, Allyloxyisopropylsulfonat, Allyloxy-n-butylsulfonat, welche gegebenenfalls substituiert sein können. Geeignete Substituenten sind polare Gruppen wie Hydroxy-, Amino- oder Carboxylgruppen, bevorzugt Hydroxygruppen. Am meisten bevorzugt wird 1-Allyloxy-2-hydroxypropylsulfonat.

Vorzugsweise enthalten die sulfonatfunktionellen Polyvinylacetale 0.5 bis 20 Gew.-%, besonders bevorzugt 3 bis 15 Gew.-% sulfonatfunktionelle Vinyl- und Allylethereinheiten, jeweils bezogen auf das Gesamtgewicht des Polyvinylacetals.

Bevorzugte sulfonatfunktionelle Polyvinylacetale enthalten
a) 20 bis 70 Gew.-% Vinylacetal-Einheiten,
b) 10 bis 30 Gew.-% Vinylalkohol-Einheiten,
c) 0.5 bis 20 Gew.-% Vinyl- und/oder Allyloxyalkylsulfonat-Einheiten,
d) 1 bis 10 Gew.-% Vinylester-Einheiten,
jeweils bezogen auf das Gesamtgewicht der sulfonatfunktionellen Polyvinylacetale, und wobei sich die Angaben in Gew.-% jeweils auf 100 Gew.-% aufaddieren.

Die Vinylacetal-Einheiten a) leiten sich von Vinylalkoholeinheiten ab, welche mit einem oder mehreren Aldehyden aus der Gruppe umfassend aliphatische und aromatische Aldehyde mit 1 bis 15 C-Atomen acetalisiert sind. Bevorzugte Aldehyde aus der Gruppe der aliphatischen Aldehyde mit 1 bis 15 C-Atomen sind Formaldehyd (Vinylformal-Einheit), Acetaldehyd (Vinylacetacetal-Einheit), Propionaldehyd (Vinylpropanal-Einheit) und am meisten bevorzugt Butyraldehyd (Vinylbutyral-Einheit), oder eine Mischung aus Butyraldehyd und Acetaldehyd. Als aromatische Aldehyde können beispielsweise Benzaldehyd oder dessen Derivate verwendet werden.

Geeignete Vinylester d) sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Resolution). Bevorzugt ist Vinylacetat.

Ein weiterer Gegenstand der Erfindung ist ein Verfahren zur Herstellung von sulfonatfunktionellen Polyvinylacetalen mittels Acetalisierung von verseiften Vinylestercopolymerisaten von einem oder mehreren Monomeren aus der Gruppe umfassend Vinylester von unverzweigten oder verzweigten Alkylcarbonsäuren mit 1 bis 15 C-Atomen und von sulfonatfunktionellen Vinyl- und/oder Allylethercomonomeren, mit > 50 Mol-% Vinylalkoholeinheiten, mit einem oder mehreren Aldehyden aus der Gruppe umfassend aliphatische und aromatische Aldehyde mit 1 bis 15 C-Atomen.

Die Vinylester-Copolymerisate können in bekannter Weise hergestellt werden; vorzugsweise durch Substanzpolymerisation, Suspensionspolymerisation oder durch Polymerisation in organischen Lösungsmitteln, besonders bevorzugt in alkoholischer Lösung. Die sulfonatfunktionellen Vinyl- bzw. Allylethercomonomere werden vorzugsweise zumindest teilweise mit dem Vinylestermonomer vorgelegt, und die Reaktion mittels zudosieren des Initiators gestartet. Geeignete Lösungsmittel und Regler sind beispielsweise Methanol, Ethanol, Propanol, Isopropanol. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylperneodecanoat oder t-Butylperpivalat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Copolymerisate erfolgt in an sich bekannter Weise, zum Beispiel nach dem Band- oder Kneterverfahren, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von Na-OH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und das Vinylalkoholcopolymer als Pulver erhalten. Die damit erhaltenen verseiften Vinylestercopolymerisate haben einen Hydrolysegrad von ≥ 50 Mol-%. Bevorzugt sind Hydrolysegrade von 70 bis 90 Mol-%.

Die Acetalisierung erfolgt mit einem oder mehreren Aldehyden aus der Gruppe umfassend aliphatische und aromatische Aldehyde mit 1 bis 15 C-Atomen. Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden.

Zur Acetalisierung werden die verseiften Vinylestercopolymere vorzugsweise in wässrigem Medium aufgenommen. Üblicherweise wird ein Festgehalt der wässrigen Lösung von 5 bis 30 Gew.-% eingestellt. Die Acetalisierung erfolgt in Gegenwart von sauren Katalysatoren wie Salzsäure, Schwefelsäure oder Phosphorsäure. Vorzugsweise wird durch Zugabe von 20 %-iger Salzsäure der pH-Wert der Lösung auf Werte < 1 eingestellt. Nach Zugabe des Katalysators wird die Lösung auf vorzugsweise -10°C bis +30°C abgekühlt und die Acetalisierungsreaktion durch Zugabe des Aldehyds gestartet. Die Zugabemenge richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration isoliert.

Aufgrund der niederen Eigenviskosität von Lösungen der sulfonatfunktionalisierten Polyvinylacetale eignen sich diese insbesonders zur Verwendung in Druckfarbenzusammensetzungen. Geeignete Druckfarbenformulierungen sind dem Fachmann bekannt und enthalten im allgemeinen 5 bis 20 Gew.-% Pigmentanteil, beispielsweise Diazo- oder Phthalocyanin-Pigmente, 5 bis 15 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Haftvermittler, Verzögerer, Weichmacher und andere Additive, wie beispielsweise Füllstoffe oder Wachse, enthalten sein.

Weitere Einsatzgebiete der sulfonatfunktionellen Polyvinylacetale sind die als Bindemittel in Korrosionsschutzmitteln. Weiter sind die sulfonatfunktionellen Polyvinylacetale auch als Bindemittel in der Keramikindustrie, speziell als Binder für keramische Grünkörper, geeignet. Zu nennen ist auch der Einsatz als Bindemittel für Keramikpulver und Metallpulver im Spritzguß (powder injection molding) und als Bindemittel für die Innenbeschichtung von Dosen, gegebenenfalls in Kombination mit Vernetzern, wie Epoxidharzen.

Die nachfolgenden Beispiele dienen zur weiteren Erläuterung der Erfindung, ohne diese in irgendeiner Weise einzuschränken:

### Herstellung der Vinylestercopolymerisate:

### Vergleichsbeispiel 1:

Zu einem Gemisch aus 360 g Vinylacetat und 354 g Methanol wurden bei 57°C unter Rühren (100 UpM) zum Start der Reaktion 5 ml einer 20 %-igen methanolischen Lösung von Dibutylperoxicarbonat zugesetzt. Danach wurden über ein Zeitraum von 225 Minuten insgesamt 35 ml dieser Initiatorlösung zudosiert. 45 Minuten nach Beginn der Initiatordosierung wurden 437 g Vinylacetat in 2 Stunden dosiert. Nach Dosierende des Initiators wurde noch für weitere 2 Stunden bei Rückfluss gerührt. Nach Abkühlen erhielt man eine 68 %-ige Polymerlösung.

### Beispiel 2:

Zu einem Gemisch aus 334 g Vinylacetat, 27 g 1-Allyloxy-2-hydroxpropylsulfonat und 354 g Methanol wurden bei 57°C unter Rühren (100 UpM) zum Start der Reaktion 5 ml einer 20 %-igen methanolischen Lösung von Dibutylperoxicarbonat zugesetzt. Danach wurden über ein Zeitraum von 225 Minuten insgesamt 35 ml dieser Initiatorlösung zudosiert. 45 Minuten nach Beginn der Initiatordosierung wurden weitere 405 g Vinylacetat und weitere 32 g des Allylethers in 2 Stunden dosiert. Nach Dosierende des Initiators wurde noch für weitere 2 Stunden bei Rückfluss gerührt.

### Vergleichsbeispiel 3:

Es wurde analog Beispiel 2 vorgegangen, mit dem Unterschied, dass anstelle des sulfonatfunktionellen Allylethers jeweils die gleiche Menge eines Allyl-Polyglykolethers mit ca. 23 Ethylenoxideinheiten (Polyglykol A1100) eingesetzt wurde.

### Vergleichsbeispiel 4:

Es wurde analog Beispiel 2 vorgegangen, mit dem Unterschied, dass anstelle des sulfonatfunktionellen Allylethers jeweils die gleiche Menge Undecensäure eingesetzt wurde.

### Vergleichsbeispiel 5:

Es wurde analog Beispiel 2 vorgegangen, mit dem Unterschied, dass anstelle des sulfonatfunktionellen Allylethers jeweils die gleiche Menge Crotonsäure eingesetzt wurde.

Die gemäß der (Vergleichs)beispiele1 bis 5 erhaltenen Harzlösungen wurden jeweils mit folgender Rezeptur zum Polyvinylalkohol verseift:

713 g einer auf 30 Gew.-% Festgehalt eingestellten Harzlösung wurden mit 233 g Methanol überschichtet. Dann wurde nach Zugabe von 48 ml einer 15 %-igen methanolischen NaOH-Lösung, bei 30°C mit dem Rühren (200 UpM) begonnen. Nach 210 Minuten wurde die Verseifung mit Essigsäure (Einstellen auf pH 7) abgebrochen. Das ausgefallene Vinylalkoholcopolymer wurde abfiltriert, mit Methanol gewaschen und getrocknet.

Die gemäß der (Vergleichs)beispiele,1 bis 5 erhaltenen Harzlösungen wurden nach deren Verseifung jeweils mit folgender Rezeptur mit Butyraldehyd acetalisiert:

In eine Vorlage aus 338 ml vollentsalztem Wasser wurden 150 ml einer 20 %-igen Lösung des Vinylalkohol-Copolymers und 125 ml HCl (20 %-ig) bei einer Rührerdrehzahl von 450 UpM gerührt und auf 0°C abgekühlt. Dann wurden über 45 Minuten 23.8 ml Butyraldehyd zudosiert. Nach den 45 Minuten Dosierzeit wurde die Suspension weitere 40 Minuten bei 0°C gehalten, bevor sie dann in 105 Minuten auf 25°C aufgeheizt wurde. Bei dieser Temperatur wurde 90 Minuten ausreagiert. Danach wurde die Suspension filtriert und mit vollentsalztem Wasser mehrmals ausgewaschen und getrocknet.

Es wurden folgende Produkte erhalten:

### Vergleichsbeispiel 6:

Nichtfunktionalisiertes Polyvinylbutyral aus Vbsp. 1.

### Beispiel 7:

Allylsulfonat-funktionalisiertes Polyvinylbutyral aus Bsp. 2.

### Vergleichsbeispiel 8:

Allylpolyglykolether-funktionalisiertes Polyvinylbutyral aus Vbsp. 3.

### Vergleichsbeispiel 9:

Mit Undecensäure funktionalisiertes Polyvinylbutyral aus Vbsp. 4.

### Vergleichsbeispiel 10:

Mit Crotonsäure funktionalisiertes Polyvinylbutyral aus Vbsp. 5.

Die Rheologie wurde in folgender Druckfarbenrezeptur getestet:

### Herstellung von Druckfarben:

Aus den Polyvinylbutyralen gemäß der (Vergleichs)beispiele 6 bis 10 wurde jeweils ein Firnis hergestellt, welcher gemäß DIN 53211 eine Auslaufzeit von 40 Sekunden im DIN-Becher (Düse 4 mm) aufweist. Dann wurden jeweils 20.8 Gewichtsteile Firnis mit 21.7 Gewichtsteilen eines Lösemittelgemisches aus Ethanol und Methoxypropanol (4:1 Gew.Teile) und 7.5 Gewichtsteilen Pigment (Rubinrot, Irgalith 4BGL) in einem Disperser über 60 Minuten vermischt.

### Rheologische Messung:

Die Rheologie wurde nach einem Tag mittels eines Kegel-Platte-Rheometers bei folgenden Einstellungen vermessen: Durchmesser 50 mm, Winkel 1°. Aufwärtskurve und Abwärtskurve jeweils von 0.2/sec bis 1000/sec während 1 Minute. Gemessen wurde die Viskosität bei einem Schergefälle von D = 10/s, D = 100/s, D = 1000/s und die Aufwärtskurve bei D_{A} = 10/s.

Die Ergebnisse sind in nachfolgender Tabelle zusammengefasst:

| | Vbsp. 6 | Bsp. 7 | Vbsp. 8 | Vbsp. 9 | Vbsp. 10 |
|---|---|---|---|---|---|
| D=10/sec | 3640 | 82 | 3820 | 1810 | 4420 |
| D=100/sec | 423 | 55 | 450 | 480 | 542 |
| D=1000/sec | 105 | 44 | 107 | 130 | 133 |
| D_{A}=10/sec | 527 | 90 | 69 | 1130 | 800 |

Die Ergebnisse zeigen, dass nichtfunktionalisiertes Polyvinylbutyral (Vbsp. 6) und Polyvinylbutyrale, welche mit anderen funktionellen Gruppen als Sulfonatfunktionen funktionalisiert sind (Vbsp. 8 - 10) zu deutlich höheren Viskositäten führen, als das mit Allylsulfonat funktionalisierte Polyvinylbutyral aus Beispiel 7. Darüber hinaus erhält man nur mit Allylsulfonat funktionalisiertem Polyvinylbutyral gleiche Viskosiäten in den Auf- und Abwärtskurven (newtonsches Fließverhalten, keine Thixotropie).

## Patentansprüche

1. Sulfonatfunktionelle Polyvinylacetale mit 0.1 bis 50 Gew.-% Comonomereinheiten, **dadurch gekennzeichnet, dass** Comonomereinheiten von Vinyl-und/oder Allyloxy-Alkylsulfonaten mit unverzweigten oder verzweigten C₁- bis C₆-Alkylgruppen, welche gegebenenfalls substituiert sein können, enthalten sind.

2. Sulfonatfunktionelle Polyvinylacetale nach Anspruch 1, enthaltend
a) 20 bis 70 Gew.-% Vinylacetal-Einheiten,
b) 10 bis 30 Gew.-% Vinylalkohol-Einheiten,
c) 0.5 bis 20 Gew.-% Vinyl- und/oder Allyloxyalkylsulfonat-Einheiten,
d) 1 bis 10 Gew.-% Vinylester-Einheiten,
jeweils bezogen auf das Gesamtgewicht der sulfonatfunktionellen Polyvinylacetale, und wobei sich die Angaben in Gew.-% jeweils auf 100 Gew.-% aufaddieren.

3. Verfahren zur Herstellung von sulfonat funktionellen Polyvinylacetalen gemäß Anspruch 1 bis 2 mittels Acetalisierung von verseiften Vinylestercopolymerisaten von einem oder mehreren Monomeren aus der Gruppe umfassend Vinylester von unverzweigten oder verzweigten Alkylcarbonsäuren mit 1 bis 15 C-Atomen und von sulfonatfunktionellen Vinyl- und/oder Allylethercomonomeren, mit ≥ 50 Mol-% Vinylalkoholeinheiten, mit einem oder mehreren Aldehyden aus der Gruppe umfassend aliphatische und aromatische Aldehyde mit 1 bis 15 C-Atomen.

4. Verfahren nach Anspruch 3, **dadurch gekennzeichnet, dass** die Acetalisierung mit einem oder mehreren Aldehyden aus der Gruppe umfassend Formaldehyd, Acetaldehyd, Propionaldehyd und Butyraldehyd erfolgt.

5. Verwendung der sulfonatfunktionellen Polyvinylacetale nach Anspruch 1 bis 2 in Druckfarbenzusammensetzungen.

6. Verwendung nach Anspruch 5, wobei die Druckfarbenzusammensetzung 5 bis 20 Gew.-% Pigmentanteil, 5 bis 15 Gew.-% Polyvinylacetal-Bindemittel und Lösungsmittel, sowie gegebenenfalls weitere Zusatzstoffe enthält.

7. Verwendung der sulfonatfunktionellen Polyvinylacetale nach Anspruch 1 bis 2 als Bindemittel in Korrosionsschutzmitteln.

8. Verwendung der sulfonatfunktionellen Polyvinylacetale nach Anspruch 1 bis 2 als Bindemittel in der Keramikindustrie, speziell als Binder für keramische Grünkörper

9. Verwendung der sulfonatfunktionellen Polyvinylacetale nach Anspruch 1 bis 2 als Bindemittel für Keramikpulver und Metallpulver im Spritzguß.

10. Verwendung der sulfonatfunktionellen Polyvinylacetale nach Anspruch 1 bis 2 als Bindemittel für die Innenbeschichtung von Dosen, gegebenenfalls in Kombination mit Vernetzern wie Epoxidharzen.

## Claims

1. Sulphonate-functional polyvinyl acetals having from 0.1 to 50% by weight of comonomer units, **characterized in that** comonomer units from vinyl- and/or allyloxyalkylsulphonates having unbranched or branched C₁-C₆-alkyl groups, unsubstituted or substituted, are present.

2. Sulphonate-functional polyvinyl acetals according to Claim 1, containing
a) from 20 to 70% by weight of vinyl acetal units,
b) from 10 to 30% by weight of vinyl alcohol units,
c) from 0.5 to 20% by weight of vinyl- and/or allyloxyalkylsulphonate units,
d) from 1 to 10% by weight of vinyl ester units, based in each case on the total weight of the sulphonate-functional polyvinyl acetalo, where the data in % by weight always give a total of 100% by weight.

3. Process for the preparation of sulphonate-functional polyvinyl acetals according to either of Claims 1 and 2 by means of acetalization of hydrolysed vinyl ester copolymers of one or more monomers from the group encompassing vinyl esters of unbranched or branched alkane carboxylic acids having from 1 to 15 carbon atoms, and of sulphonate-functional vinyl ether and/or sulphonate-functional allyl ether comonomers, having ≥ 50 mol% of vinyl alcohol units, with one or more aldehydes from the group encompassing aliphatic and aromatic aldehydes having from 1 to 15 carbon atoms.

4. Process according to Claim 3, **characterized in that** the acetalization process uses one or more aldehydes from the group encompassing formaldehyde, acetaldehyde, propionaldehyde and butyraldehyde.

5. Use of the sulphonate-functional polyvinyl acetals according to either of Claims 1 and 2 in printing ink compositions.

6. Use according to Claim 5, where the printing ink composition comprises from 5 to 20% by weight of pigment content, from 5 to 15% by weight of polyvinyl acetal binder and solvent, and also, if appropriate, other additives.

7. Use of the sulphonate-functional polyvinyl acetals according to any of Claims 1 to 2 as binder in corrosion-protection compositions.

8. Use of the sulphonate-functional polyvinyl acetals according to either of Claims 1 and 2 as binder in the ceramics industry, specifically as binder for unfired ceramic products.

9. Use of the sulphonate-functional polyvinyl acetals according to either of Claims 1 and 2 as binder for ceramic powders and metal powders in injection moulding.

10. Use of the sulphonate-functional polyvinyl acetals according to either of Claims 1 and 2 as binder for the internal coating of cans, if appropriate in combination with crosslinking agents, such as epoxy resins.

## Revendications

1. Polyvinylacétals à fonction sulfonate renfermant de 0,1 à 50 % en poids de motifs comonomères, **caractérisés en ce que** des motifs comonomères de vinyl- et/ou d'allyloxy-alkylsulfonates renfermant des groupes alkyle en C₁-C₆, non ramifiés ou ramifiés, qui peuvent éventuellement être substitués, sont présents.

2. Polyvinylacétals à fonction sulfonate selon la revendication 1, renfermant:
a) de 20 à 70 % en poids de motifs vinylacétal,
b) de 10 à 30 % en poids de motifs alcool vinylique,
c) de 0,5 à 20 % en poids de motifs vinyl- et/ou allyloxy-alkylsulfonate,
d) de 1 à 10 % en poids de motifs ester vinylique,
dans chaque cas, par rapport au poids total des polyvinylacétalo à fonction sulfonate, et où la somme des données en % en poids est, dans chaque cas, de 100 % en poids.

3. Procédé de préparation de polyvinylacétals à fonction sulfonate selon les revendications 1 à 2, par acétalisation de copolymères d'ester vinylique hydrolisés d'un ou de plusieurs monomères parmi le groupe comprenant des esters vinyliques d'acides alkylcarboxyliques, non ramifiés ou ramifiés, renfermant de 1 à 15 atomes de carbone, et de comonomères éther vinylique et/ou allylique à fonction sulfonate, renfermant ≥ 50 % en moles de motifs alcool vinylique, avec un ou plusieurs aldéhydes parmi le groupe comprenant des aldéhydes aliphatiques et aromatiques renfermant de 1 à 15 atomes de carbone.

4. Procédé selon la revendication 3, **caractérisé en ce que** l'acétalisation est réalisée avec un ou plusieurs aldéhydes parmi le groupe comprenant le formaldéhyde, l'acétaldéhyde, le propionaldéhyde et le butyraldéhyde.

5. Utilisation des polyvinylacétals à fonction sulfonate selon les revendications 1 à 2 dans des compositions d'encres d'impression.

6. Utilisation selon la revendication 5, dans laquelle la composition d'encre d'impression comprend une proportion de pigment de 5 à 20 % en poids, de 5 à 15 % en poids de liant polyvinylacétal et de solvant, ainsi qu'éventuellement les additifs supplémentaires.

7. Utilisation des polyvinylacétals à fonction sulfonate selon les revendications 1 à 2, en tant que liant dans des compositions de protection contre la corrosion.

8. Utilisation des polyvinylacétals à fonction sulfonate selon les revendications 1 à 2, en tant que liant dans l'industrie des céramiques, spécifiquement en tant que liant pour des produits céramiques crus.

9. Utilisation des polyvinylacétals à fonction sulfonate selon les revendications 1 à 2, en tant que liant pour des poudres céramiques et des poudres métalliques dans le moulage par injection.

10. Utilisation des polyvinylacétals à fonction sulfonate selon les revendications 1 à 2, en tant que liant pour le revêtement interne de boîtes de conserve, éventuellement en combinaison avec des agents de réticulation, tels que des résines époxy.
